**Europäisches Patentamt**

**European Patent Office**

**Office européen des brevets**

(19)

(11) Veröffentlichungsnummer: **0 069 922**
**B1**

(12) **EUROPÄISCHE PATENTSCHRIFT**

(45) Veröffentlichungstag der Patentschrift:
04.02.87

(51) Int. Cl.⁴: **B 60 K 41/26, B 60 K 41/04**

(21) Anmeldenummer: 82105854.2

(22) Anmeldetag: 01.07.82

(54) Verfahren zum Steuern von automatischen Getrieben in Kraftfahrzeugen.

(30) Priorität: 15.07.81 DE 3127931
08.10.81 DE 3139965

(43) Veröffentlichungstag der Anmeldung:
19.01.83 Patentblatt 83/3

(45) Bekanntmachung des Hinweises auf die Patenterteilung:
04.02.87 Patentblatt 87/6

(84) Benannte Vertragsstaaten:
AT BE CH DE FR GB IT LI NL SE

(56) Entgegenhaltungen:
DE-A-1 954 757
DE-A-2 165 707
FR-A-2 305 313
FR-A-2 311 679
GB-A-2 058 257
US-A-3 684 066

(73) Patentinhaber: ROBERT BOSCH GMBH, Postfach
50, D-7000 Stuttgart 1 (DE)

(72) Erfinder: Müller, Alfred, Dr.- Ing., Innsbrucker
Strasse 63, D-8031 Gröbenzell (DE)
Erfinder: Schaller, Dieter, Hauptstrasse 37, D-7265
Neubulach (DE)
Erfinder: Schwab, Manfred, Dr., Hallstattweg 1,
D-7016 Gerlingen (DE)

EP 0 069 922 B1

## Beschreibung

### Stand der Technik

Die Erfindung geht aus von einem Verfahren nach der Gattung des Hauptanspruches und des nebengeordneten Anspruches 2.

Es ist bekannt, bei automatischen Stufengetrieben in Kraftfahrzeugen die Umschaltpunkte des der Getriebesteuerung zugrundeliegenden Schaltmusters dann zu verändern, wenn das Bremspedal betätigt wird. Hierdurch wird erreicht, daß bei Betätigung des Bremspedals eine erhöhte Motorbremswirkung dadurch ausgenutzt wird, daß ein Hochschalten unterdrückt oder gar rückgeschaltet wird. Eine derartige Vorrichtung ist in der DE-B-19 54 757 beschrieben.

Die bekannte Anordnung hat jedoch den Nachteil, daß starr in Abhängigkeit von der Betätigung des Bremspedals eine feste Umschaltung des Schaltmusters vorgenommen wird, so daß die Dauer und damit die Intensität der Bremsbetätigung sich nicht auswirkt und daß darüber hinaus die Reaktion des Motors unzureichend berücksichtigt wird. Weiterhin bleibt unberücksichtigt, daß im allgemeinen die erhöhte Bremswirkung auch dann beibehalten werden soll, wenn das Bremspedal bereits wieder gelöst wurde, das Fahrpedal jedoch noch nicht wieder betätigt wird.

Aus der FR-A 2 305 313 ist ein gattungsbildendes automatisches Getriebe bekannt bei dem das Übersetzungsverhältnis des Getriebes in Abhängigkeit von der Betätigung eines Bremsorgans erhöht wird. Das Übersetzungsverhältnis wird dabei so lange erhöht, wie das Bremsorgan betätigt wird, oder die Motordrehzahl überschreitet eine vorgegebene Kennlinie in Abhängigkeit von der Antriebsdrehzahl. Nachteilig bei dieser vorbekannten Anordnung ist jedoch, daß das Übersetzungsverhältnis auch dann noch änderbar ist, wenn die Bremse nicht mehr getreten wird.

### Vorteile der Erfindung

Das erfindungsgemäße Verfahren mit den kennzeichnenden Merkmalen des Hauptanspruches und des nebengeordneten Anspruches 2 hat demgegenüber den Vorteil, daß die Dauer der Bremsbetätigung und damit die Intensität der gewünschten Bremsung mit berücksichtigt wird, daß ein Überdrehen des Motors sicher vermieden wird und daß die erhöhte Motorbremswirkung solange beibehalten wird, bis das Fahrpedal erneut betätigt wird. Durch die in den Unteransprüchen aufgeführten Maßnahmen sind vorteilhafte Weiterbildungen der in den nebengeordneten Ansprüchen angegebenen Verfahren möglich.

So kann durch Festlegen eines schmalen Bereiches geringer Fahrpedalauslenkung bewirkt werden, daß beim erneuten Betätigen des Fahrpedales nach einem Bremsvorgang die Bremswirkung wenigstens in geringem Umfang aufrechterhalten wird, wenn das Fahrpedal nur geringfügig betätigt wird.

Weiterhin läßt sich das erfindungsgemäße Verfahren mit Vorteil dann einsetzen, wenn das Übersetzungsverhältnis des verwendeten Getriebes stufenlos einstellbar ist.

Weitere Vorteile ergeben sich aus der Beschreibung und der beigefügten Zeichnung.

### Zeichnung

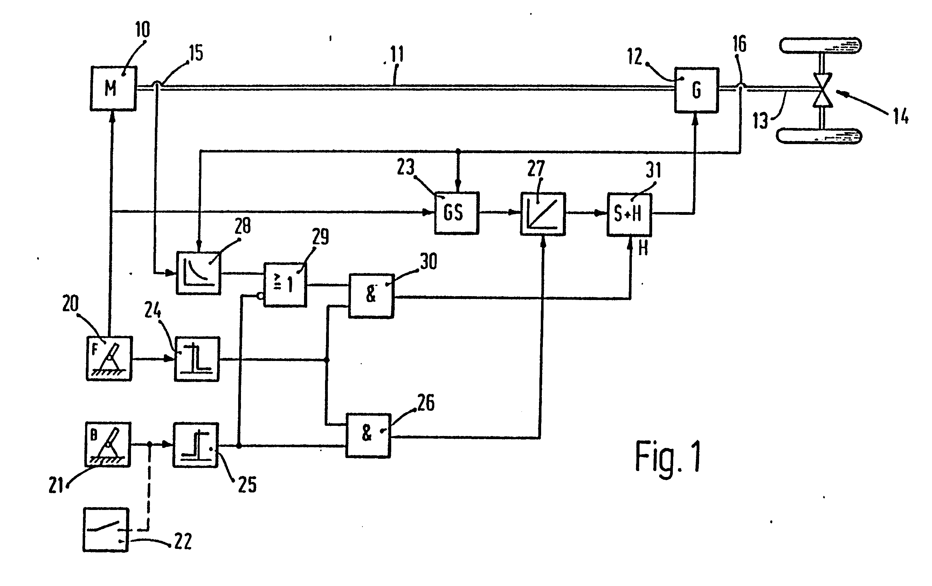

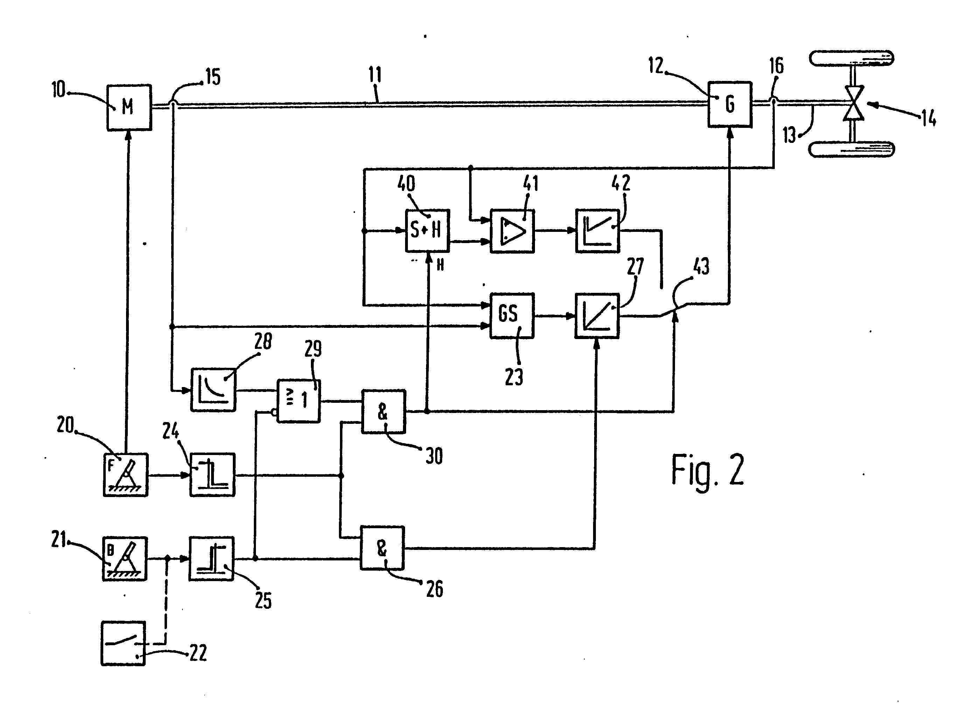

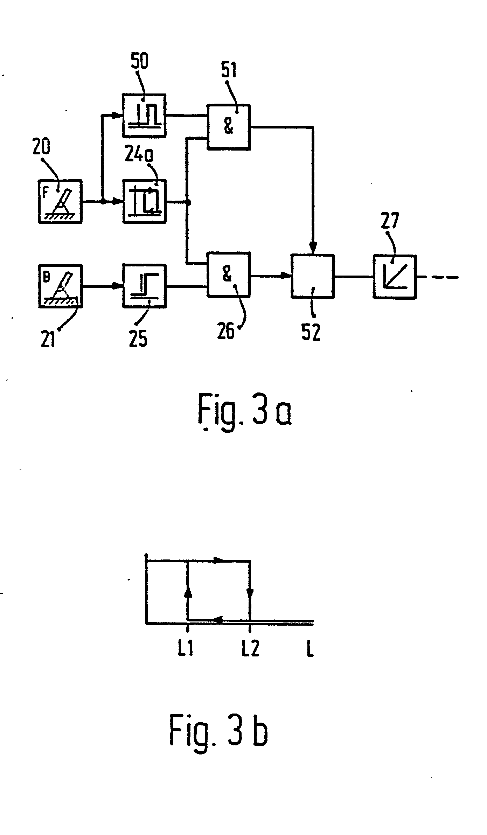

Ausführungsbeispiele der Erfindung sind in den Zeichnungen dargestellt und in der nachfolgenden Beschreibung näher erläutert. Es zeigen: Figuren 1 und 2 Blockschaltbilder von zwei Ausführungsformen von Vorrichtungen zur Durchführung des erfindungsgemäßen Verfahrens; Figur 3a eine Variante zu den in Figur 1 und 2 dargestellten Schaltbildern mit Definition eines schmalen Bereiches geringer Fahrpedalauslenkung; Figur 3b ein Diagramm zur Erläuterung des in Figur 3a dargestellten Hystereseschalters.

### Beschreibung der Ausführungsbeispiele

In Figur 1 ist mit 10 der Motor eines Kraftfahrzeuges bezeichnet, der über eine Antriebswelle 11 mit einem automatischen Getriebe 12 in Verbindung steht, das seinerseits über eine Abtriebswelle 13 mit dem Abtrieb 14 in Verbindung steht. Am Ausgang des Motors 10 bzw. des Getriebes 12 sind ein Motordrehzahl-Geber 15 bzw. ein Abtriebsdrehzahl-Geber 16 angeordnet.

Zur Steuerung des automatischen Getriebes 12 sind ein Fahrpedal 20 und ein Bremspedal 21 vorgesehen, die in noch zu beschreibender Weise auf die Funktion einer Getriebesteuereinheit 23 einwirken. Das Fahrpedal 20 ist dabei einmal in an sich bekannter Weise mit dem Motor 10 und der Getriebesteuereinheit 23 verbunden, zum anderen ist es auch auf einen Schwellwertschalter 24 geführt, der bei gelöstem oder näherungsweise gelöstem Fahrpedal 20 ein positives logisches Ausgangssignal und bei ausgelenktem Fahrpedal 20 das Ausgangssignal Null abgibt. Das Bremspedal 21 ist neben seiner üblichen Funktion zur Steuerung des Bremsorganes des Kraftfahrzeuges mit einem Schwellwertschalter 25 verbunden, dessen Ausgangssignal sich invers zum Ausgangssignal des Schwellwertschalters 24 verhält, d.h., daß bei nicht betätigtem Bremspedal 21 das Ausgangssignal Null ist und sich bei betätigtem Bremspedal 21 ein positives logisches Ausgangssignal einstellt. Es versteht sich, daß sich die Funktion des Bremspedales 21 im hier interessierenden Umfang auch durch einen Schalter 22 darstellen läßt, so daß die nachstehend beschriebenen erfindungsgemäßen Verfahren auch rein manuell steuerbar sind.

Die Ausgangssignale der Schwellwertschalter 24, 25 sind in einem UND-Gatter 26 verknüpft, dessen Ausgang auf eine der Getriebesteuereinheit 23 nachgeordnete Übersetzungssteuerung 27 einwirkt. Die Einwirkung ist dabei derart, daß bei einem positiven Ausgangssignal des UND-Gatters 26 das Ausgangssignal der Getriebesteuereinheit 23 so übersteuert wird, daß sich im Getriebe 12 eine Erhöhung des Übersetzungsverhältnisses ergibt, das üblicherweise in Abhängigkeit von der Stellung des Fahrpedals 20 und vom Ausgangssignal des Abtriebsdrehzahl-Gebers 16 eingestellt wird.

Weiterhin ist ein Kennlinienspeicher 28 vorgesehen, der vom Motordrehzahl-Geber 15 und vom Abtriebsdrehzahl-Geber 16 angesteuert wird. Der Kennlinienspeicher 28 enthält eine Kennlinie maximaler Motordrehzahl in Abhängigkeit von der Abtriebsdrehzahl. Überschreitet die tatsächliche Motordrehzahl die im Kennlinienspeicher 28 vorgegebene Kennlinie, wird ein dem Kennlinienspeicher 28 nachgeschaltetes ODER-Gatter 29 angesteuert, dessen zweiter, invertierter Eingang mit dem Ausgang des Schwellwertschalters 25 verbunden ist. Der Ausgang des ODER-Gatters 29 ist mit dem Ausgang des Schwellwertschalters 24 in einem UND-Gatter 30 verknüpft, das den Hold-Eingang eines Sample-and-Hold-Stufe 31 ansteuert, die zwischen der Übersetzungssteuerung 27 und dem Getriebe 12 angeordnet ist.

Ein erstes erfindungsgemäßes Verfahren soll nun anhand der Vorrichtung gemäß Figur 1 veranschaulicht werden:

Im üblichen Fahrbetrieb wird die Übersetzung des Getriebes 12 durch die Getriebesteuereinheit 23 in Abhängigkeit von der Auslenkung des Fahrpedals 20 (Lastinformation) und dem Ausgangssignal des Abtriebsdrehzahl-Gebers 16 (Fahrgeschwindigkeitsinformation) gesteuert. Es versteht sich dabei, daß auch andere bekannte Steuerarten für die Getriebesteuereinheit 23 verwendet werden können, insbesondere kann die Lastinformation auch auf andere Weise als aus der Stellung des Fahrpedals 20 ermittelt werden, beispielsweise aus der Stellung einer Drosselklappe, eines Einspritzpumpenreglers und dgl.

Wird nun das Fahrpedal 20 gelöst und das Bremspedal 21 betätigt, erscheinen an den Ausgängen der Schwellwertschalter 24, 25 positive Signale und das UND-Gatter 26 wird durchgesteuert. Dies bewirkt eine Ansteuerung der Übersetzungssteuerung 27 mit der Wirkung, daß das Übersetzungsverhältnis des Getriebes 12 erhöht wird. Hierdurch ergibt sich eine Erhöhung der Motordrehzahl und damit eine erhöhte Motorbremswirkung. Gleichzeitig wird der eine Eingang des UND-Gatters 30 vom Ausgang des Schwellwertschalters 24 positiv angesteuert. Das UND-Gatter 30 ist damit für ein positives Signal an seinem anderen Eingang durchlässig. Diese positive Signal entsteht dann, wenn entweder das Bremspedal gelöst wird (invertierender Eingang des ODER-Gatters 29) oder wenn die Motordrehzahl die im Kennlinienspeicher 28 vorgegebene Kennlinie überschreitet (nicht invertierender Eingang des ODER-Gatters 29). Sobald also eine dieser beiden Bedingungen erreicht ist, d.h. entweder das Bremspedal gelöst wird oder ein Überdrehen des Motors droht, wird das UND-Gatter 30 durchgesteuert und die gerade eingenommene, von der Übersetzungssteuerung 27 vorgegebene Getriebeübersetzung wird in der Sample-and-Hold-Stufe 31 festgehalten. Dieses Festhalten des Übersetzungsverhältnisses wird nun solange aufrechterhalten, bis das UND-Gatter 30 durch ein 0-Signal vom Schwellwertschalter 24 wieder gesperrt wird, was dann der Fall ist, wenn das Fahrpedal 20 überhaupt bzw. um einen bestimmten Mindestbetrag ausgelenkt wurde, je nachdem wie der Schwellwert in der Schwellwertstufe 24 festgelegt ist. Dies bedeutet insgesamt, daß nach Wiederbetätigen des Fahrpedals 20 sowohl die Übersetzungssteuerung 27 wie auch die Sample-and-Hold-Stufe 31 außer Funktion treten, so daß sich wieder eine übliche Betätigung des Getriebes 12 in Abhängigkeit von den obengenannten Fahrzeugparametern einstellt.

Die in Figur 2 dargestellte weitere Vorrichtung zur Durchführung eines erfindungsgemäßen Verfahrens ist weitgehend gleich aufgebaut wie die in Figur 1 dargestellte, so daß gleiche Bezugszeichen verwendet sind. Im Unterschied zur Anordnung gemäß Figur 1 ist bei der gemäß Figur 2 jedoch eine Sample-and-Hold-Stufe 40 vorgesehen, die von dem Signal des Abtriebsdrehzahl-Gebers 16 angesteuert wird und deren Hold-Eingang wiederum mit dem Ausgang des UND-Gatters 30 verbunden ist. Dieser steuert gleichzeitig einen Umschalter 43, durch den der Steuereingang des Getriebes 12 von der Übersetzungssteuerung 27 auf die Reihenschaltung eines Vergleichers 41 und eines Reglers 42 umschaltbar ist, die der Sample-and-Hold-Stufe 40 nachgeschaltet sind. Der Vergleicher 41 wird dabei an seinem anderen Eingang vom Abtriebsdrehzahl-Geber 16 angesteuert.

Das weitere erfindungsgemäße Verfahren soll nun anhand der Anordnung gemäß Figur 2 erläutert werden:

Wie bei dem oben beschriebenen ersten Verfahren wird bei Lösen des Fahrpedals 20 und Betätigen des Bremspedals 21 über das UND-Gatter 26 und die Übersetzungssteuerung 27 eine Erhöhung des Übersetzungsverhältnisses des Getriebes 12 bewirkt, da zu diesem Zeitpunkt der Umschalter 43 in der in Figur 2 eingezeichneten Stellung ist. Wird nun jedoch das Bremspedal 21 wieder gelöst oder überschreitet die Motordrehzahl die in dem Kennlinienspeicher 28 vorgegebene Kennlinie, wird über das ODER-Gatter 29 und das UND-Gatter 30 der Umschalter 43 umgelegt und gleichzeitig in der Sample-and Hold-Stufe 40 der Augenblickswert des Abtriebsdrehzahl-Gebers 16, entsprechend der Fahrgeschwindigkeit des Kraftfahrzeuges, verrastet. Dieser Augenblickswert der Fahrgeschwindigkeit wird im Vergleicher 41 mit der tatsächlichen Fahrgeschwindigkeit verglichen und über den Regler 42 wird in Abhängigkeit von der Abweichung dieser beiden Größen das Getriebe 12 in der Weise nachgeregelt, daß der Augenblickswert der Fahrgeschwindigkeit im Augenblick der Umschaltung des Umschalters 43 erhalten bleibt, d.h., daß das Ausgangssignal des Vergleichers 41 auf Null geregelt wird. Durch diese Vorgehensweise ergibt sich insgesamt bei Einleitung eines Bremsvorganges zunächst eine schnelle Erhöhung der Motordrehzahl bei konstanter Fahrgeschwindigkeit, wobei bei Überschreiten der vorgegebenen zulässigen Motordrehzahl die nunmehr hohe Motorbremswirkung für den Bremsvorgang und damit die Verminderung der Fahrgeschwindigkeit zur Verfügung steht.

Bei den vorab beschriebenen erfindungsgemäßen Verfahren hatte der Fahrer nur die Wahl zwischen einem Betrieb mit hoher Bremswirkung und dem normalen Fahrprogramm mit sehr geringer Motorbremswirkung. Um diese Verfahren zu erweitern, kann eine Verfahrensvariante verwendet werden, die nachstehend anhand der Vorrichtung gemäß Figur 3a und dem Diagramm gemäß Figur 3b veranschaulicht wird.

Dabei ist dem Fahrpedal 20 statt eines einfachen Schwellwertschalters 24 ein Hysterese-Schwellwertschalter 24a nachgeordnet. Parallel dazu ist das Ausgangssignal des Fahrpedals 20 auf einen Bereichsschalter 50 geführt, der dann ein positives Ausgangssignal abgibt, wenn das Eingangssignal in einem bestimmten schmalen Bereich liegt, der deckungsgleich mit der Hysteresebreite des Hysterese-Schwellwertschalters 24a ist. Die Ausgangssignale von Bereichsschalter 50 und Hysterese-Schwellwertschalter 24a sind in einem weiteren UND-Gatter 51 verknüpft, dessen Ausgang auf den Steuereingang einer Verstellstufe 52 geführt ist, die zwischen das UND-Gatter 26 und die Übersetzungssteuerung 27 geschaltet ist. Der Hysterese-Schwellwertschalter 24a hat dabei eine Kennlinie, wie sie in Figur 3b dargestellt ist. Bei gelöstem Fahrpedal 20 ergibt sich dabei ein positives Ausgangssignal, das solange beibehalten wird, bis das Fahrpedal 20 über den Lastwert L2 ausgelenkt wurde, wonach sich ein Ausgangssignal Null ergibt. Wird nun das Fahrpedal 20 wieder gelöst, schaltet der Hysterese-Schwellwertschalter 24a erst dann wieder auf ein positives Ausgangssignal, wenn der Lastwert L1 unterschritten wurde, der kleiner als L2 ist. Hierdurch wird ein Bereich geringer Fahrpedalauslenkung, nämlich der zwischen L1 und L2 festgelegt, in dem vermutet werden kann, daß der Fahrer noch eine gewisse begrenzte Motorbremswirkung wünscht.

Für das weitere erfindungsgemäße Verfahren ergibt sich damit zunächst keine Änderung, da bei gelöstem Fahrpedal 20 der Bereichsschalter 50 das Ausgangssignal Null abgibt und das UND-Gatter 51 damit gesperrt ist und die Verstellstufe 52 außer Funktion setzt, so daß das Signal des UND-Gatters 26 unverändert an die Übersetzungssteuerung 27 weitergeleitet wird. Wird nun bei gelöstem Bremspedal 21 und damit gesperrtem UND-Gatter 26 das Fahrpedal 20 wieder ausgelenkt, bleibt das positive Ausgangssignal am Hysterese-Schwellwertschalter 24a stehen, bis der Lastwert L2 erreicht ist. Dabei wird im Bereich L1 bis L2 das UND-Gatter 51 durchgesteuert, so daß die Verstellstufe 52 in diesem Bereich angesteuert wird, die über die Übersetzungssteuerung 27 eine Verminderung des Übersetzungsverhältnisses des Getriebes 12 nur um einen bestimmten Betrag zuläßt. Erst wenn das Fahrpedal 20 wieder über den Wert L2 hinaus ausgelenkt wurde, wird das UND-Gatter 51 wiederum wegen des Bereichsschalters 50 gesperrt, so daß das Getriebe 12 in den üblichen Fahrbetrieb eines automatischen Stufengetriebes gelangt.

Die vorstehend beschriebenen erfindungsgemäßen Verfahren lassen sich mit besonderem Vorteil dann einsetzen, wenn das Getriebe 12 ein stufenlos verstellbares Getriebe ist, da dann eine quasikontinuierliche Regelung möglich ist und das Übersetzungsverhältnis immer gerade soweit verstellt werden kann, wie dies nach den gegenwärtigen Fahrbedingungen und dem Fahrerwunsch erforderlich und gewünscht ist.

## Patentansprüche

1. Verfahren zum Steuern von automatischen Getrieben in Kraftfahrzeugen, bei denen das Übersetzungsverhältnis des Getriebes (12) in Abhängigkeit von der Betätigung eines Bremsorganes (21) erhöht wird, wobei die Erhöhung so lange gegeben ist, wie das Bremsorgan (21) betätigt wird oder die Motordrehzahl eine vorgegebene Kennlinie in Abhängigkeit von der Abtriebsdrehzahl überschreitet, dadurch gekennzeichnet, daß das Übersetzungsverhältnis festgehalten wird, sobald das Bremsorgan (21) nicht mehr betätigt wird, und daß das gerade eingestellte und festgehaltene Übersetzungsverhältnis gespeichert und das Festhalten des Übersetzungsverhältnisses solange aufrechterhalten wird, bis ein Fahrpedal (20) erneut betätigt wird.

2. Verfahren zum Steuern von automatischen Getrieben in Kraftfahrzeugen, bei denen das Übersetzungsverhältnis des Getriebes (12) in Abhängigkeit von der Betätigung eines Bremsorganes (21) erhöht wird, wobei die Erhöhung so lange gegeben ist, wie das Bremsorgan (21) betätigt wird, oder die Motordrehzahl eine vorgegebene Kennlinie in Abhängigkeit von der Abtriebsdrehzahl überschreitet, dadurch gekennzeichnet, daß nach einer Freigabe des Bremsorganes (21) die gerade eingenommene Fahrgeschwindigkeit des Kraftfahrzeuges gespeichert und das Übersetzungsverhältnis so eingestellt wird, daß die Fahrgeschwindigkeit beibehalten wird, bis das Fahrpedal (20) erneut betätigt wird.

3. Verfahren nach einem der Ansprüche 1 oder 2, dadurch gekennzeichnet, daß das Übersetzungsverhältnis bei erneuter Betägigung des Fahrpedals (20) unterhalb eines vorbestimmten Schwellwertes (L2) nur um einen bestimmten Betrag wieder verminderbar ist.

4. Verfahren nach einem der vorhergehenden Ansprüche, dadurch gekennzeichnet, daß das Übersetzungsverhältnis des Getriebes (12) stufenlos eingestellt wird.


**Claims**

1. Process for the control of automatic gearboxes in motor vehicles, in which the transmission ratio of the gearbox (12) is increased as a function of the actuation of a brake element (21), the increase existing for as long as the brake element (21) is actuated or the engine speed exceeds a given characteristic line as a function of the output speed, characterized in that the transmission ratio is held as soon as the brake element (21) is no longer actuated, and in that the transmission ratio just set and held is stored and the holding of the transmission ratio is maintained until an accelerator pedal (20) is actuated once more.

2. Process for the control of automatic gearboxes in motor vehicles, in which the transmission ratio of the gearbox (12) is increased as a function of the actuation of a brake element (21), the increase existing for as long as the brake element (21) is actuated or the engine speed exceeds a given characteristic line as a function of the output speed, characterized in that, after a release of the brake element (21), the travelling speed just assumed by the motor vehicle is stored and the transmission ratio is set such that the travelling speed is maintained until the accelerator pedal (20) is actuated once more.

3. Process according to one of Claims 1 or 2, characterized in that, when the accelerator pedal (20) is actuated once more, the transmission ratio can be reduced again only by a certain amount below a predetermined threshold value (L2).

4. Process according to one of the preceding claims, characterized in that the transmission ratio of the gearbox (12) is set with infinitely variable adjustment.


**Revendications**

1.- Procédés de commande de boîtes de vitesses automatiques dans des véhicules automobiles, procédés dans lesquels le rapport de transmission de la boîte de vitesses (12) est augmenté en fonction de l'actionnement d'un organe de freinage (21), cette augmentation étant assurée aussi longtemps que l'organe de freinage (21) est actionné ou bien que la vitesse de rotation du moteur franchit vers le haut une ligne caractéristique prédéfinie en fonction de la vitesse de rotation de sortie, procédés caractérisés en ce que le rapport de transmission est maintenu fixe dès que l'organe de freinage (21) n'est plus actionné, et que ce rapport de transmission ainsi réglé et maintenu est mis en mémoire et le maintien de ce rapport de transmission est prolongé jusqu'à ce que la pédale d'accélérateur (20) soit actionnée à nouveau.

2.- Procédés pour commander des boîtes de vitesses automatiques dans des véhicules automobiles, procédés dans lesquels le rapport de transmission de la boîte de vitesses (12) est augmenté en fonction de l'actionnement d'un organe de freinage (21), cette augmentation étant assurée tant que l'organe de freinage (21) est actionné ou bien que la vitesse de rotation du moteur franchit vers le haut une courbe caractéristique prédéfinie en fonction de la vitesse de rotation de sortie, procédés caractérisés en ce que, après la libération de l'organe de freinage (21), la vitesse de déplacement ainsi prise par le véhicule est mise en mémoire et que le rapport de transmission est réglé de façon que la vitesse de déplacement soit maintenue jusqu'à ce que la pédale d'accélérateur (20) soit à nouveau actionnée.

3.- Procédés selon une des revendications 1 ou 2, caractérisés en ce que le rapport de transmission lors d'un nouvel actionnement de la pédale d'accélérateur (20) au-dessous d'une valeur de seuil prédéterminée (L2) est susceptible d'être à nouveau réduit d'une quantité déterminée.

4.- Procédés selon une des précédentes revendications, caractérisés en ce que le rapport de transmission de la boîte de vitesses (12) est réglé de façon continue.

Fig. 1

Fig. 2

0069 922

Fig. 3 a

Fig. 3 b